# EUROPÄISCHE PATENTANMELDUNG

(11) **EP 1 050 403 A2**
(43) Veröffentlichungstag der Anmeldung: **08.11.2000**
(21) Anmeldenummer: 00109586.8
(22) Anmeldetag: 05.05.2000
(51) Int. Cl.: B32B 27/08, B32B 27/18, C08K 3/26

(54) **Verbundschichtplatte oder Folie für Kühlschränke**

(30) Priorität: 06.05.1999 DE 19920916
(71) Anmelder: BASF AKTIENGESELLSCHAFT, 67056 Ludwigshafen (DE)
(72) Erfinder: Morgenstern, Herbert, 67158 Ellerstadt (DE)

(57) **Zusammenfassung**

Eine Verbundschichtplatte oder -folie aus Thermoplasten oder Thermoplastmischungen, enthaltend mindestens eine Substratschicht A) und mindestens eine Funktionsschicht B), die ein oder mehrere Treibmittel oder Nukleierungsmittel enthält, wobei die Funktionsschicht B) dünner ist als die Substratschicht A), Verfahren zu ihrer Herstellung sowie ein Verfahren zur Herstellung von wärmeisolierenen Formkörpern.

## Beschreibung

Die Erfindung betrifft eine Verbundschichtplatte oder -folie aus Thermoplasten oder Thermoplastmischungen, enthaltend mindestens eine Substratschicht A) und mindestens eine Funktionsschicht B), die ein oder mehrere Treibmittel oder Nukleierungsmittel enthält, ein Verfahren zu ihrer Herstellung sowie Verfahren zur Herstellung von wärmeisolierenden Formkörpern.

Bei Polystyrolplatten oder -folien, die auf Polyurethanschaumstoffen aufgebracht sind, zeigt sich häufig das sogenannte Problem der Blisterbildung. Durch Fehistellen im Polyurethanschaumstoff kommt es zur Anhäufung und Kondensation der Treibmittel, die sich in der Polystyrolschicht lösen. Bei Temperaturänderungen entweicht das gelöste Treibgas aus dem Polystyrol unter Blasenbildung.

Daher wird beispielsweise in Kühlgeräteteilen zum Schutz der Polystyrolwand zwischen diese und dem Polyurethanschaum eine Barrierefolie aus Polyolefinen eingebracht (EP-A 0492886).

Verbundschichtplatten oder -folien aus einem ungeschäumten Thermoplasten und einem geschäumten Thermoplasten sind bekannt. Hier bildet jedoch der Schaumstoff den Hauptanteil und der ungeschäumte Thermoplast bildet eine Schutzschicht.

Die NL-7216119 beispielsweise beschreibt Formkörper aus einem geschlossenzelligen Schaumstoffkern und einer glatten und glänzenden Haut. Die Formkörper werden durch Extrusion eines Themoplasten, der einen Füllstoff und ein Treibmittel enthält, erhalten, wobei die Extrusionsform an der Oberfläche unterhalb der Zersetzungstemperatur des Treibmittels gehalten wird.

Die DT 2821333 beschreibt eine Röhre aus einem thermoplastischen Material, die aus einer mittleren Schaunschicht zwischen zwei Deckschichten besteht. Die Röhre wird durch Coextrusion hergestellt, wobei das Material für die mittlere Schicht ein Treibmittel enthält. Dadurch wird eine leichte und doch stabile Röhre erhalten.

Eine Schrumpfhülse aus einer geschäumten und einer ungeschäumten Polystyrolschicht beschreibt die EP-A 0084360. Die Schichtdicke der geschäumten Schicht liegt im Bereich von 0,1 bis 1 mm, um eine genügende Stoßabsorption zu erreichen. Die Schichtdicke der ungeschäumten Schicht beträgt 2 bis 160 µm. Sie dient der Bedruckbarkeit. Die Schrumpffolien finden Verwendung als Schutzschicht für Glasflaschen.

Eine weitere Schrumpffolie aus einer inneren geschlossenzelligen Schaumschicht aus Polystyrol und Ethylen-Vinylacetat-Copolymer und einer ungeschäumten Außenschicht aus Polyethylen wird in US 4069934 beschrieben.

Aufgabe der vorliegenden Erfindung war die Bereitstellung einer Verbundschichtplatte oder -folie, die sich insbesondere zur Herstellung von Kühlschrankgehäusen mit Polyurethanschaumkernen eignet. Mit der Verbundschichtplatte sollen Kühlschrankteile auf einfache und günstige Weise herstellbar sein, ohne daß sichtbare Blasen auftreten.

Eine weitere Aufgabe bestand darin, eine Verbundschichtplatte mit verbesserter Haftung zu Schaumstoffen, insbesondere Polyurethanschaum bereitzustellen.

Demgemäß wurde eine Verbundschichtplatte oder -folie aus Thermoplasten oder Thermoplastmischungen, enthaltend mindestens eine Substratschicht A) und mindestens eine Funktionsschicht B), die ein oder mehrere Treibmittel oder Nukleierungsmittel enthält, gefunden, wobei die Funktionsschicht B) dünner ist als die Substratschicht A).

Als Thermoplasten für die Substratschicht A) und für die Funktionsschicht B) eignen sich beispielsweise glasklares Polystyrol (GPBS), schlagzäh modifiziertes Polystyrol (HIPS), Styrolcopolymere, wie Styrol-Butadien-Blockcopolymere, ASA, SAN, ABS, Polyolefine, wie Polyethylen oder Polypropylen, Acrylate oder Methacrylate, wie PMMA, Polycarbonate (PC), Polyvinylchlorid (PVC), Polyethylenterephthalat (PET) oder Mischungen davon.

Bevorzugt enthalten die Substratschicht A) und die Funktionsschicht B) Polystyrol. Besonders bevorzugt wird für die Substratschicht A) ein spannungsrißbeständiges, schlagzähes Polystyrol. Bevorzugt besteht die Funktionsschicht B) aus dem gleichen Thermoplasten wie die Substratschicht A) oder aus einem Polystyrol-/ Polyethylenblend. Auf die Substratschicht A) können weitere Schichten, insbesondere Schichten mit einem höheren Glanz, Farbigkeit , Spannungsrißbeständigkeit, Beständigkeit gegen Chemikalien und Umwelteinflüsse oder einer anderen Oberflächenstruktur, aufgebracht werden. Besonders bevorzugt wird eine Glanzdeckschicht C) aus Polystyrol.

Die Dicke der Funktionsschicht B beträgt maximal 40 %, bevorzugt 1 bis 40 %, insbesondere 2 bis 10 % der Gesamtdicke der Verbundschichtplatte. Im allgemeinen liegt die Dicke der Substratschicht im Bereich von 0,1 bis 50 mm, bevorzugt 1 bis 5 mm, und die Dicke der Funktionsschicht im Bereich von 0,04 bis 2 mm, insbesondere von 0,1 bis 2 mm. Die Dicke der Glanzdeckschicht C) liegt im allgemeinen im Bereich von 0,01 bis 1, insbesondere im Bereich von 0,02 bis 0,2 mm.

Als Treibmittel oder Nukleierungsmittel für die Funktionsschicht B) können die üblicherweise zur Schäumung von Thermoplasten verwendeten chemischen oder physikalischen Treibmittel oder Nukleierungsmittel verwendet werden. Es können auch ein oder mehrere Treibmittel oder Nuklierungsmittel oder Mischungen von Treibmitteln und Nukleierungsmittel verwendet werden.

Beispiele für Treibmittel sind aliphatische Kohlenwasserstoffe, wie Propan, Butan, Isobutan, Pentan, Neopentan, Isopentan oder Hexan, alicyclische Kohlenwasserstoffe, wie Cyclobutan, Cyclopentan und Cylohexan, und halogenierte Kohlenwasserstoffe, wie Methylchlorid, Methylenchlorid, Dichlorfluoromethan, Trichlorfluormethan, Dichlordifluormethan. Weitere Treibmittel sind Natriumbicarbonat, Ammoniumcarbonat oder Ammoniumhydrogencarbonat, Zitronensäure oder Citrate, wie Natriumcitrat, Natriumglutaminat, Phthalsäureanhydrid, Benzoesäure, Benzoate, wie Alluminiumbenzoat, Azodicarbonamid, Azoisobutyronitril, Dinitropentamethylen.

Geeignete Nukleierungsmittel sind beispielsweise feinverteilte anorganische Füllstoffe, wie Bariumsulfat, Calciumsulfat, Calciumcarbonat, Bleisulfat, Siliziumdioxid, Silikate, wie Calciumsilikat, Talk, Aluminumdioxid, Aluminiumsilikate, Sulfide, Titandioxid, Magnesiumoxid, Magnesiumcarbonat, Ton, Kohlenstoff, Metallpulver, Zinkoxid, Asbest oder Glasfasern. Die Teilchengrößen der Nukleierungsmittel liegt im allgemeinen im Bereich von 0,005 bis 10 µm, bevorzugt im Bereich von 0,01 bis 1 µm.

Das Treibmittel oder Nukleierungsmittel wird in der Regel in einer Menge im Bereich von 0,1 bis 10 Gew.-%, bevorzugt 0,3 bis 3 Gew.-%, bezogen auf die Funktionsschicht B, verwendet.

Die Verbundschichtplatten oder -folien können beispielsweise durch Coextrusion der Thermoplasten oder der Thermoplastmischungen für die einzelnen Schichten und/oder durch Laminieren der Schichten auf die Substratschicht A) hergestellt werden. Beispielsweise kann zur Oberflächenveredelung die Glanzdeckschicht C) coextrudiert oder als Witterungsschutzfolie (optional mit Dekordruck) auf die Substratschicht A) kaschiert werden. Die Nukleierungsmittel oder Treibmittel können hierbei bei der Coextrusion zudosiert werden oder als separate Batche in Form von Thermoplastgranulaten hergestellt und zudosiert werden. Bei Verwendung von chemischen Treibmitteln kann eine Schäumung schon ganz oder teilweise wahrend der Coextrusion erfolgen. Bei Verwendung von Nukleierungsmitteln in der Funktionsschicht B) erfolgt die Blasenbildung in der Regel erst bei Kontakt mit treibmittelhaltigen Polyurethanschäumen und Temperaturänderungen.

Verbindet man die Verbundschichtplatte oder -folie mit der Seite der Funktionsschicht B) mit einem Polyurethanschaumstoff, so erfolgt ein Konzentrationsabbau des aus dem Polyurethanschaumstoff entweichenden Treibmittels durch eine stärkere Verteilung in der Funktionsschicht B). Bei Temperaturschwankungen entstehen somit in der Verbundschichtplatte viele kleine Blasen anstelle einer großen Blase. Die Blasenbildung erfolgt bevorzugt in der Funktionsschicht B), so daß die Substratschicht im wesentlichen intakt bleibt. Die Funktionsschicht B) wirkt somit als "Opferschicht".

Nach einer weiteren AusführungsfOrm kann die Funktionsschicht auch vorgeschäumt und anschließend auf die Substratschicht laminiert werden.

Durch die große Oberfläche der sich in der Funktionsschicht B) bildenden Schaumzellen wird auch die Haftung zu einem Polyurethanschaum verbessert. Bevorzugt sollte die Funktionsschicht B) im Hinblick auf eine verbesserte Haftung eine offenzellige Schaumstruktur bilden. Hierbei wird das Eindringen des PUR-Schaums und ein mechanisches Verhaken möglich. Die Steuerung der Offenzelligkeit kann durch die Wahl der Treibmitteldosierung und der Temperatur beeinflußt werden.

Die erfindungsgemäße Verbundschichtplatte oder -folie eignet sich daher besonders zur Herstellung von wärmeisolierenden Formkörpern, beispielsweise Transportkisten, Wäremespeicher oder Kühl- oder Gefriergeräte oder Geräteteile, insbesondere Kühlschranktüren.

### Beispiele

### Beispiel 1: Herstellung einer Verbundfolie: (PS/PS-Schaum)

Spannungsrißbeständiges, hochschlagfestes Polystyrol (PS 2710 der BASF Aktiengesellschaft) wurde bei einer Temperatur von 200°C auf eine Schichtdicke von 600 µm extrudiert und zusammen mit einer 800 µm dicken, mit einer Mischung aus Natriumhydrogencarbonat und Zitronensäure vorgeschäumnten Polystyrolfolie (ebenfalls PS 2710) in einem Dreiwalzenglättwerk laminiert.

### Beispiel 2: Herstellung einer Verbundplatte PUR/PS-Schaum/PS

Die zugeschnittene Verbundfolie aus Beispiel 1 wurde mit der geschäumten Seite nach oben in den Boden einer Schäumform (Bosch-Lanze) eingelegt und eine Zweikomponenten-PUR-Formmasse darüber geschäumt.

### Beispiel 3: Herstellung einer Verbundplatte PUR/PS/PS-Schaum

Die zugeschnittene Verbundfolie aus Beispiel 1 wurde mit der geschäumten Seite nach unten in den Boden einer Schäumform (Bosch-Lanze) eingelegt und eine Zweikomponenten-PUR-Formmasse darüber geschäumt.

Die mikroskopische Aufnahme des Querschnittes zeigte, daß der PUR-Schaum in der Verbundplatte aus Beispiel 2 in die angrenzende PS-Schaumschicht eingedrungen war.

Im Peel-Test wurden die Kräfte zur Trennung der Verbundplatten aus Beispiel 2 und 3 gemessen und in Tabelle 1 zusammengestellt:

**Tabelle 1**

| Peel-Test der Verbundplatten | | |
|---|---|---|
| | Verbundplatte | Kraft F [N] |
| Beispiel 2 | PUR/PS-Schaum/PS | 20,4 |
| Beispiel 3 | PUR/PS/PS-Schaum | 5,8 |

## Patentansprüche

1. Verbundschichtplatte oder -folie aus Thermoplasten oder Thermoplastmischungen, enthaltend mindestens eine Substratschicht A) und mindestens eine Funktionsschicht B), die ein oder mehrere Treibmittel oder Nukleierungsmittel enthält, dadurch gekennzeichnet, daß die Funktionsschicht B) dünner ist als die Substratschicht A).

2. Verbundschichtplatte oder -folie nach Anspruch 1, dadurch gekennzeichnet, daß die Substratschicht A) und die Funktionsschicht B) Polystyrol enthalten.

3. Verbundschichtplatte oder -folie nach den Ansprüchen 1 oder 2, dadurch gekennzeichnet, daß die Substratschicht A) aus einem spannungsrißbeständigen, schlagzähem Polystyrol besteht.

4. Verbundschichtplatte oder -folie nach einem der Ansprüche 1 bis 3, dadurch gekennzeichnet, daß auf die Substratschicht A) eine Glanzdeckschicht C) aufgebracht ist.

5. Verbundschichtplatte oder -folie nach einem der Ansprüche 1 bis 4, dadurch gekennzeichnet, daß die Dicke der Funktionsschicht B) maximal 40 % der Gesamtdicke der Verbundschichtplatte oder -folie beträgt.

6. Verbundschichtplatte oder -folie nach einem der Ansprüche 1 bis 5, dadurch gekennzeichnet, daß die Dicke der Substratschicht A) im Bereich von 0,1 bis 50 mm und die Dicke der Funktionsschicht B) im Bereich von 0,04 bis 2 mm liegen.

7. Verbundschichtplatte oder -folie nach einem der Ansprüche 1 bis 6, dadurch gekennzeichnet, daß die Funktionsschicht B) Natriumbicarbonat, Zitronensäure , Pentan, Cyclopentan, Siliziumdioxid, Titandioxid, Bariumsulfat, Bariumcarbonat, Magnesiumoxid, Magnesiumcarbonat, Zinkoxid, Talk, Kreide, Azodicarbonamid oder Mischungen davon enthält.

8. Verbundschichtplatte oder -folie nach einem der Ansprüche 1 bis 7, dadurch gekennzeichnet, daß die Funktionsschicht B) das Treibmittel oder Nukleierungsmittel in einer Menge im Bereich von 0,3 bis 3 Gew.-%, bezogen auf die Funktionsschicht B), enthält.

9. Verfahren zur Herstellung einer Verbundschichtplatte oder -folie gemäß einem der Ansprüche 1 bis 8 durch Coextrusion oder Laminieren.

10. Verfahren zur Herstellung von wärmeisolierenden Formkörpern, dadurch gekennzeichnet, daß man eine Verbundschichtplatte oder -folie gemäß den Ansprüchen 1 bis 8 thermoformt und mit der Funktionsschicht B) mit einem Polyurethanschaumstoff verbindet.

11. Wärmeisolierende Formkörper, erhältlich aus einer Verbundschichtplatte oder -folie gemäß einem der Ansprüche 1 bis 8.

12. Wärmeisolierende Formkörper nach Anspruch 11, dadurch gekennzeichnet, daß der Formkörper einen Polyurethanschaumstoff und eine mit der Funktionsschicht B) darauf aufgebrachte Verbundschichtplatte oder -folie enthält.
